# FASCICULE DE BREVET EUROPEEN

(11) **EP 0 803 603 B1**
(45) Date de publication et mention de la délivrance du brevet: **06.11.2002**
(21) Numéro de dépôt: 97420066.9
(22) Date de dépôt: 18.04.1997
(51) Int. Cl.: D06N 3/00, D06N 3/06

(54) **Procédé et installation de fabrication par enduction d'une bande en matière plastique**
Verfahren und Anlage zum Beschichten von Kunststoffbahnen
Process and installation for coating a web of plastic material

(30) Priorité: 26.04.1996 FR 9605522
(43) Date de publication de la demande: 29.10.1997
(73) Titulaire: GERFLOR SA, 69100 Villeurbanne (FR)
(72) Inventeur: Plusquellec, Paul, 26130 Saint-Paul-Trois-Chateaux (FR); Verhulst, Jacques, 26130 Saint-Paul-Troix-Chateaux (FR); Perillon, Jean-Luc, 26130 Saint-Paul-Trois-Chateaux (FR)
(74) Mandataire: Guerre, Dominique

(56) Documents cités:
- EP-A- 0 252 430
- WO-A-87/01972
- GB-A- 1 033 923
- GB-A- 1 569 943
- US-A- 3 682 741

## Description

La présente invention concerne la fabrication par enduction d'une bande en matière plastique, relativement peu épaisse, et comprenant de manière générale au moins une couche d'enduction, comportant elle-même un substrat composé par au moins une matière thermoplastique de base, notamment un polymère ou copolymère chloré, par exemple du chlorure de polyvinyle. La couche d'enduction constitue ou non la seule couche de la bande en matière plastique; elle peut être associée ou liée à tout support approprié, par exemple un non-tissé de fibres minérales, par exemple de verre. De telles bandes en matière plastique peuvent être utilisées comme revêtements de sols ou murs, comme bâches, ou encore comme revêtements de mobilier ou d'automobile.

La présente invention sera maintenant introduite, définie, décrite et discutée par référence à des revêtements de sols ou muraux, obtenus sous forme de rouleaux ou carreaux à partir d'une bande en matière plastique, telle que précédemment définie.

Comme on le sait, de tels revêtements comprennent une ou plusieurs couches, obtenues par calandrage ou enduction, et comportant elles-mêmes des décors multiples ou variés, sur lesquels on peut éventuellement appliquer une couche de protection appelée couche d'usure, celle-ci apportant une résistance mécanique et physico-chimique aux revêtements. Et ces mêmes revêtements peuvent aussi présenter un effet de relief, en correspondance ou non avec le décor, et obtenu par voie mécanique, ou par voie chimique, par exemple par inhibition d'un moussage du substrat d'une ou plusieurs couches d'enduction.

Dans la description suivante et les revendications les expressions suivantes portent les significations données ci-après :
- "couche d'enduction" est une couche obtenue en appliquant sur un support une mince couche de matière sous forme fluide, appelée plastisol, le plastisol étant une dispersion de fines particules de polymère dans un mélange liquide de un ou plusieurs plastifiants; une simple élévation de température fait passer la couche d'enduction de l'état fluide à l'état solide, c'est la gélification ;
- "couche calandrée" est une couche obtenue à partir d'un mélange solide déjà gélifié de matière plastique chauffée par passage en force entre deux ou plusieurs cylindres chauds.

De manière générale, pour obtenir par enduction un revêtement assimilable à au moins une bande en matière plastique, on enchaîne au moins les étapes suivantes:
a) on dispose ou obtient un plastisol à l'état pâteux, c'est-à-dire à l'état relativement liquide ou semi-liquide, comprenant le substrat plastique sous forme divisée, et un agent plastifiant ;
b) on dépose le plastisol en couche sur un support plat, pour obtenir la couche d'enduction à l'état pâteux ;
c) on gélifie le plastisol pour obtenir la couche d'enduction à l'état solide, mais relativement plastique ;
d) éventuellement, après l'étape c) de gélification, on graine ou on gaufre la couche d'enduction.

Il est connu dans différents documents, par exemple les demandes de brevet EP-A-0 252 430, GB-A-1 033 923, GB-A-1 569 943, US-A-3 682 741, et WO-A-87/01972 d'incorporer des particules à base de matière plastique servant à créér un effet décoratif dans la couche d'enduction, par exemple par encapsulation (EP-A-0 252 430) ou encore par sédimentation (US-A-3 682 741).

Le procédé généralement mis en oeuvre dans ces documents est un procédé de fabrication d'une bande en matière plastique, comprenant au moins une couche d'enduction comportant un substrat composé par au moins une matière thermoplastique de base, notamment un polymère ou copolymère chloré, par exemple du chlorure de polyvinyle, ledit procédé comprenant au moins les étapes suivantes:
(a) on dispose d'un plastisol à l'état pâteux comprenant le substrat sous forme divisée et un agent plastifiant ;
(b) on dépose le plastisol en couche sur un support plat, pour obtenir la couche d'enduction à l'état pâteux ;
(c) on gélifie le plastisol, pour obtenir ladite couche d'enduction à l'état solide mais plastique ; et
entre l'étape (b) de formation de la couche d'enduction et l'étape (c) de gélification du plastisol, on effectue au moins une étape de poudrage selon laquelle on accélère par simple gravité des particules de poudre plastique vers la surface extérieure de la couche d'enduction à l'état pâteux, et on distribue les particules ainsi accélérées selon la surface extérieure de ladite couche d'enduction.

Le procédé précédemment décrit requiert par conséquence la mise en oeuvre d'un plastisol à l'état pâteux, composé de manière traditionnelle de la matière thermoplastique de base, par exemple polychlorure de vinyle, sous forme divisée ou discrète, dispersée dans un agent plastifiant sous forme liquide.

Toutefois, l'utilisation de plastisols de ce type ne demeure pas sans problème, car elle nécessite l'emploi d'une quantité importante de plastifiants, par exemple, un taux de plastifiant compris entre 55 à 65 pour cent en poids de la quantité de matière plastique de base, pour obtenir une viscosité acceptable pour les outils d'enduction, tels que les racles, et pour permettre une bonne désaération de la ou des couches d'enduction formées. Les plastifiants utilisés les plus couramment sont des dérivés organiques d'acides tels que l'acide phtalique, l'acide phosphorique, l'acide benzoïque, l'acide adipique, l'acide citrique, l'acide glutarique, l'acide laurique, l'acide sébacique, l'acide azélaïque, l'acide caprique, et l'acide trimellitique. Par contre, cette quantité importante de plastifiants ne permet pas d'obtenir un revêtement présentant des propriétés de surface acceptables une fois les couches gélifiées, et le revêtement présente notamment une résistance au tâchage et un encrassement à la marche rédhibitoires, un toucher gras et collant, une odeur désagréable, une souplesse excessive, et une tendance exagérée et permanente à l'exsudation.

Afin de pallier ces inconvénients, les fabricants de revêtements ajoutent souvent des fluidifiants pour remplacer une partie des plastifiants, ce qui permet aussi d'obtenir des viscosités plus basses qu'avec des plastifiants seuls, les basses viscosités étant souhaitées pour permettre une enduction à vitesse élevée, et donc économiquent intéressante. Ce sont en général des liquides organiques de basse viscosité, par exemple des coupes pétrolières dont l'intervalle de distillation est compris entre 130°C et 320°C, ou des produits tels que le dodécylbenzène, et l'isobutyrate de téxanol. Les formulations des couches d'enduction, par exemple à base de PVC, peuvent contenir des fluidifiants à raison de 5 à 20 pour cent en poids de la quantité de matière plastique de base, ce qui permet de baisser le taux de plastifiant dans la formulation jusqu'à environ 40 à 50 pour cent en poids de la quantité de matière plastique de base. Ainsi, le toucher et la résistance au tachage deviennent acceptables.

Malgré cet avantage, l'utilisation de fluidifiants crée un autre problème, à savoir, en ce qu'ils génèrent d'importants volumes de composants organiques volatiles (COV). En particulier, l'utilisation de fluidifiants ne permet pas de répondre aux nouvelles exigences sur la qualité de l'air. La volatilisation de ces composants sur les sites industriels, par exemple lors de la gélification des couches de matière plastique, est inévitable, et nécessite une installation coûteuse pour la condensation et la capture des effluents. Par ailleurs, même après gélification, le revêtement comportant des fluidifiants continue à dégager des COV par évaporation pendant toute son utilisation, ce qui se traduit par des problèmes d'odeur, et de maux de tête dans les lieux où ces produits sont installés. Les nouvelles législations européennes fixeront une quantité maximale pour le dégagement de ces COV, et les fluidifiants couramment utilisés sont particulièrement visés.

Il est également important de souligner que l'utilisation de fluidifiants ne permet pas de réduire la quantité de plastifiants au dessous d'un certain taux.

Pour éviter d'utiliser des fluidifiants, et en technique d'enduction, on pourrait supposer qu'il suffirait d'augmenter tout simplement la quantité de plastifiant dans le plastisol de base, en surplastifiant, afin de garder une viscosité compatible avec la processabilité sur les équipements de production. Cette solution donne malheureusement un produit final sous forme de bande qui est collante, et inappropriée en particulier à un usage en tant que revêtement de sol.

Le déposant a découvert qu'en enduction, la solution à ce problème double est de surplastifier le plastisol pour former la couche d'enduction, et puis de réduire la proportion de plastifiant à un taux normal, voire inférieur à la normale par l'ajout et intégration homogène de PVC, dans la couche enduite, avant finition du produit, c'est-à-dire avant gélification, et ceci en évitant pratiquement toute utilisation de fluidifiant.

La présente invention a donc pour objet. principal un procédé de fabrication d'une bande en matière plastique, et notamment d'un revêtement de sol, permettant de supprimer pratiquement tout fluidifiant et de limiter le taux de plastifiant, et ceci sans modifier les techniques et outils d'enduction.

Par conséquent, l'objet de l'invention concerne un procédé selon le schéma général donné ci-avant, plus particulièrement caractérisé en ce que la poudre plastique comprend des particules d'au moins une matière thermoplastique d'incorporation, susceptible de s'intégrer ou se dissoudre au moins partiellement, dans le substrat du plastisol, notamment une matière thermoplastique de nature chimique identique ou similaire à celle de la matière thermoplastique de base ;
l'accélération est volontaire, et l'accélération volontaire et la distribution sont effectuées de sorte que les particules soient incorporées de manière homogène au moins dans une couche superficielle, de dessus et/ou d'envers, de la couche d'enduction.

De préférence, la poudre plastique comprenant des particules d'au moins une matière thermoplastique d'incorporation s'intègrent complètement et de manière homogène dans la matrice macromoléculaire du substrat de la couche d'enduction.

Par l'expression "accélération volontaire" telle qu'utilisée dans la description et les revendications, on entend une accélération des particules superieure à l'accélération due à l'effet de pesanteur.

La présente invention a également pour objet une installation de fabrication par enduction d'une bande en matière plastique, comprenant au moins une couche d'enduction comportant un substrat composé par au moins une matière thermoplastique de base, ladite installation comprenant :
(A) une source d'un plastisol à l'état pâteux comprenant le substrat sous forme divisée et un agent plastifiant ;
(B) un poste de dépose du plastisol en couche sur un support plat, pour obtenir la couche d'enduction à l'état pâteux ;
(C) un poste de gélification du plastisol, pour obtenir ladite couche d'enduction à l'état solide mais plastique ;
et entre le poste (B) de dépose de la couche d'enduction et le poste (C) de gélification du plastisol, est disposé un poste de poudrage.

L'installation est plus particulièrement caractérisée en ce que le poste de poudrage comprend :
- une source d'une poudre plastique, comprenant des particules d'au moins une matière thermoplastique d'incorporation ;
- des moyens d'accélération des particules de la poudre vers la surface extérieure de la couche d'enduction à l'état pâteux, et de distribution des particules ainsi accélérées selon la surface extérieure de ladite couche d'enduction, agencés et contrôlés pour incorporer de manière homogène les particules distribuées et accélérées au moins dans une couche superficielle de la couche d'enduction.

Selon l'invention, les particules doivent former une matrice homogène et intégrée avec la matière thermoplastique de base, si possible dès leur incorporation dans le plastisol, et au moins dans une couche superficielle de la couche d'enduction, et en tout cas après gélification. Il s'ensuit qu'il n'y a pas de sédimentation des particules, ni encapsulation de ces dernières dans la matrice de la couche d'enduction comme cela est le cas avec les documents de l'art antérieur discutés précédemment.

Avantageusement, le pourcentage pondéral et global de l'agent plastifiant est au moins égal à 20 PCR, c'est-à-dire 20 parties pour 100 de la matière thermoplastique de base du substrat de la couche d'enduction.

Conformément à la présente invention, on a en particulier découvert que l'incorporation, au moins superficielle, voire à coeur d'une poudre plastique,comprenant des particules d'au moins une matière thermoplastique, susceptible de s'intégrer ou de se dissoudre au moins partiellement, voire complètement et de manière homogène dans la matrice macromoléculaire du substrat du plastisol, fluidifiait en quelque sorte la couche d'enduction, sans modifier par ailleurs de manière importante ses autres propriétés physico-mécaniques. Cette découverte surprenante a permis au déposant de réduire la quantité globale de plastifiants dans la couche d'enduction en-dessous d'environ 30 parties pour cent de la matière thermoplastique de base de la couche d'enduction.

Par ailleurs, les bandes en matière plastique comprenant cette couche d'enduction essentiellement sans fluidifiant, lorsqu'elles sont utilisées en tant que, ou pour former, des revêtements de sols ou muraux, présentent de meilleures performances que des revêtements de sols fabriqués par calandrage.

En outre, puisque le procédé selon la présente invention permet d'éviter l'utilisation de fluidifiants, il devient possible de respecter les exigences en matière de qualité de l'air, et en même temps de garder, voire améliorer le comportement des revêtements ou bandes fabriqués selon le procédé, et notamment d'améliorer leur toucher, leur résistance au tâchage, à l'encrassement, et à l'usure, et leur flexibilité ou rigidité.

Avec le procédé selon la présente invention, il est également possible d'utiliser des particules de PVC broyées de récupération, c'est-à-dire recyclées, sans que l'on soit obligé de les mélanger avec un autre polymère en poudre, compatible avec le PVC, tel que par exemple, l'éthylène vinyle acétate (EVA). Jusqu'à présent, ceci n'a pas été possible avec les procédés traditionnels d'enduction.

Le déposant a également découvert que selon le procédé de l'invention, il est possible d'avoir un proportion pondérale de particules d'incorporation intégrées dans le plastisol comprise entre environ 20% à environ 60% en poids par rapport au poids de la matière thermoplastique de base contenu dans le plastisol de départ. Ceci est approximativement équivalent à une proportion pondérale de particules intégrées comprise entre environ 20% à environ 50% en poids par rapport au poids total de la couche d'enduction.

Selon un mode d'exécution préféré du procédé de l'invention, la poudre plastique à incorporer a une granulométrie comprise entre 2 µm et 500 µm, et préférentiellement entre 20 µm et 100 µm.

Avantageusement, pendant l'étape de poudrage, les particules accélérées sont distribuées selon une densité surfacique comprise entre 30 g/m² et 500 g/m², et préférentiellement entre 50 g/m² et 300 g/m².

Plus préférentiellement, pendant l'étape de poudrage, la viscosité de la couche d'enduction à l'état pâteux est réglée à une valeur inférieure à 5 Pa.s, et de préférence à une valeur de l'ordre de 1 Pa.s.

Dans une variante encore plus préférée du procédé selon l'invention, on répète au moins une fois l'étape de poudrage.

Préférentiellement, après l'étape (c) de gélification, on graine la couche d'enduction.

Dans une variante d'exécution préférée de l'installation selon la présente invention, les moyens d'accélération et distribution de la poudre plastique d'incorporation comprennent l'un quelconque des matériels suivants, à savoir matériel de projection par voie électrostatique ou triboélectrique, matériel avec métier dispersant, matériel avec turbine de projection.

De manière préférentielle, les moyens d'accélération et distribution de la poudre plastique d'incorporation comprennent un matériel de projection par voie électrostatique, avec des moyens d'interposition de la couche d'enduction à l'état pâteux entre au moins une buse d'éjection de la poudre plastique, et le support de nature métallique formant cible, lui-même relié à la terre. En effet, on a trouvé qu'en utilisant la projection électrostatique, cela permet d'une part d'augmenter, de manière surprenante, la quantité de poudre pouvant être absorbée par le plastisol, et d'autre part, d'améliorer la pénétration de la poudre dans le plastisol.

Selon un mode d'exécution encore plus préféré de l'invention, l'installation est réglée pour charger 5 négativement la poudre plastique d'incorporation entre 5 kV et 70 kV, et de préférence entre 30 kV et 50 kV.

Dans un mode d'exécution préféré de la bande en matière plastique selon l'invention, le pourcentage pondéral de l'agent plastifiant est au plus égal à 100 PCR, et préférentiellement compris entre 70 PCR et 40 PCR, plus préférentiellement compris entre environ 30 et environ 40 PCR.

Avantageusement, la matière plastique d'incorporation comprend des particules d'un polymère ou copolymère chloré, par exemple du polychlorure de vinyle, avantageusement de récupération et préalablement broyé.

De préférence, la matière plastique d'incorporation est un polymère ou copolymère chloré, choisi notamment parmi les homopolymères de PVC, les copolymères de chlorure de vinyle et d'acétochlorure de vinyle, et les copolymères greffés.

Dans une variante préférée d'exécution, la bande comprend un support plat de la couche d'enduction, par exemple un non tissé de fibres minérales.

Les objets de la présente invention, ainsi que les avantages qu'ils apportent, seront mieux compris à l' aide de la description détaillée suivante, donnée à titre non limitatif, et des dessins en annexe, dans lesquels :
- la Figure 1 représente une vue schématique d'une installation ou ligne de fabrication d'un revêtement de sol selon un mode d'exécution préféré de l'invention ;
- la Figure 2 représente une vue schématique d'une installation ou ligne de fabrication d'un revêtement de sol selon un autre mode d'exécution préféré de l'invention ;
- la Figure 3 représente une vue schématique à l'échelle agrandie d'un poste de poudrage par accélération de particules, représenté sur les Figures 1 et 2 et selon une variante préférée de l'invention.

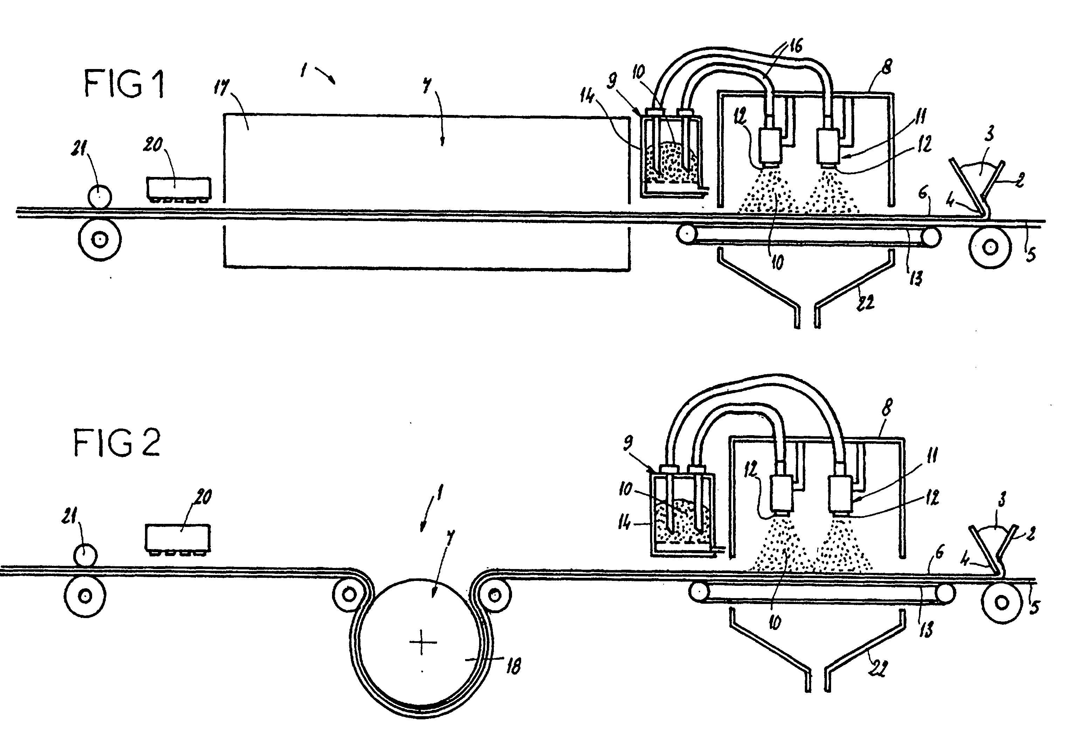

La Figure 1 représente une vue schématique en coupe le long d'une installation 1 ou ligne de fabrication d'un revêtement de sol conformément à l'invention. Cette installation comporte une source 2 d'un plastisol 3 à l'état pâteux comprenant un substrat sous forme divisée et un agent plastifiant. Le substrat est composé par au moins une matière thermoplastique de base, par exemple, du PVC. Les plastisols vinyliques tels qu'utilisés dans la présente invention sont généralement des dispersions de fines particules de polymères vinyliques dans un ou plusieurs plastifiants liquides. Le plastisol 3 enduit peut également contenir des adjuvants et différents additifs, par exemple susceptibles de migrer, dans une poudre ajoutée, ce qui sera expliqué ci-après.

L'agent plastifiant précédemment mentionné peut être un plastifiant ou un mélange de plastifiants connus de manière générale, et de préférence est choisi dans le groupe consistant en les dérivés organiques d'acides tels que l'acide phtalique, l'acide phosphorique, l'acide benzoïque, l'acide adipique, l'acide citrique, l'acide glutarique, l'acide laurique, l'acide sébacique, l'acide azélaïque, l'acide caprique, l'acide trimellitique, ou un mélange de l'un ou plusieurs de ces composés. Plus préférentiellement encore, le plastifiant est choisi dans le groupe consistant en le diéthylhexylphthalate, le butylbenzylphthalate, l'alkylbenzylphthalate, le diisoheptylphthalate, le diisooctyl phthalate, le diisononyl phthalate, le diphenyloctylphosphate, l'isodecyldiphenylphosphate, l'alkylbenzylphosphate, le tri-2-éthylhexylphosphate, le tricresyl phosphate, le diéthyléneglycol dibenzoate, le dipropylèneglycol dibenzoate, le polyéthylèneglycol dibenzoate, l'isodecyl benzoate, le glycéryl-tribenzoate, le diéthylhexyladipate, le diisononyladipate, le tridecyladipate, le didecyladipate, le triéthylcitrate, le tributylcitrate, l'acetyltributylcitrate, les trimellitates, les paraffines chlorées, les polyesters, et les dérivés époxy, ou un mélange d'au moins deux de ceux-ci.

Selon la présente invention, les fluidifiants sont essentiellement remplacés par des plastifiants, ce qui veut dire que le plastisol de départ est donc surplastifié, et ne comporte pratiquement aucun fluidifiant, et de préférence est totalement exempt de fluidifiant. Le plastifiant en excès est totalement absorbé par une poudre plastique d'incorporation qui est saupoudrée sur le plastisol enduit pâteux. Le taux de plastifiant final est déterminé par le poids de poudre plastique d'incorporation déposée.

La source 2 de plastisol 3 peut être une trémie le contenant, associée à un poste de dépose 4, par exemple une racle, du plastisol 3 en couche sur un support plat 5, pour obtenir une couche d'enduction 6 à l'état pâteux. Le support plat 5 permet de supporter la couche d'enduction à l'état pâteux, et peut être par exemple un papier "release" de type connu, un non tissé de fibres minérales, ou une bande sans fin anti-adhérente métallique ou non-métallique.

Plus en aval de la source 2 et du poste de dépose 4 se trouve un poste de gélification 7, dont les détails seront donnés plus loin, mais qui sert essentiellement à obtenir ladite couche d'enduction 6 à l'état solide mais plastique.

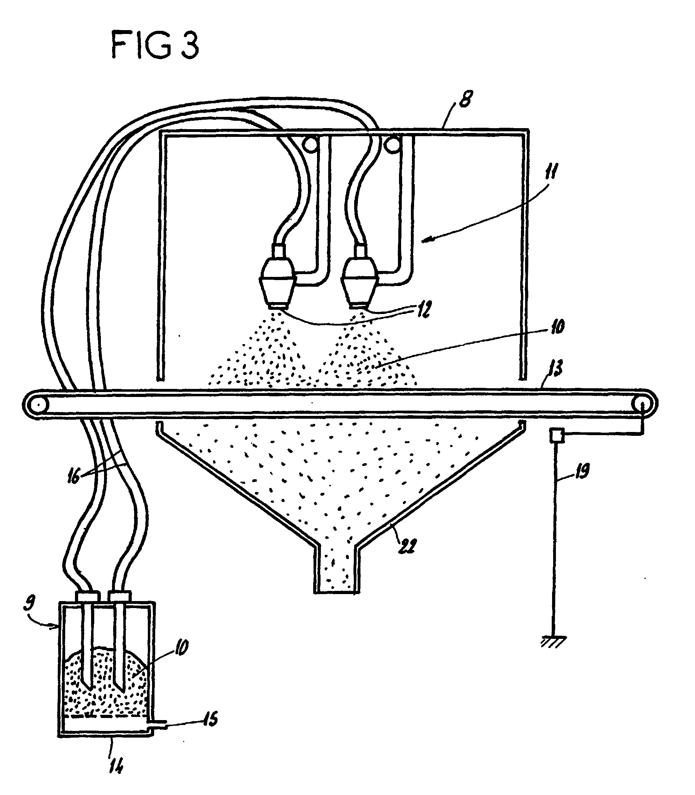

Entre le poste de dépose 4 et le poste de gélification 7 du plastisol 3, est disposé un poste de poudrage 8. Ce poste de poudrage, qui est représenté schématiquement à l'échelle agrandie par la Figure 3, comprend une source 9 d'une poudre plastique 10, comprenant des particules d'au moins une matière thermoplastique d'incorporation, et des moyens d'accélération 11 des particules de la poudre 10 vers la surface extérieure de la couche d'enduction 6 à l'état pâteux, et de distribution des particules ainsi accélérées selon la surface extérieure de ladite couche d'enduction. Les moyens d'accélération et distribution 11 sont agencés et contrôlés pour incorporer de manière homogène les particules distribuées et accélérées au moins dans une couche superficielle de la couche d'enduction.

Les moyens d'accélération 11 et distribution de la poudre plastique 10 d'incorporation comprennent l'un quelconque des matériels suivants, à savoir matériel de projection par voie électrostatique ou triboélectrique, matériel avec métier dispersant, matériel avec turbine de projection. Des métiers convenables peuvent être obtenus par exemple auprès des sociétés SALADIN, CARATSCH, KNOBEL,SCHILLING, une turbine de projection auprès de la société PILLON, un projecteur électrostatique auprès de la société SAMES, et un projecteur triboélectrique auprès de la société RANSBURG-GEMA.

Dans la Figure 3, les moyens d'accélération 11 et de distribution de la poudre plastique 10 d'incorporation comprennent un matériel de projection par voie électrostatique, avec des moyens d'interposition de la couche d'enduction (non représentée) à l'état pâteux entre au moins une buse d'éjection 12 de la poudre plastique 10, et le support 13 de nature métallique formant cible. Ce support 13 est par exemple un tapis transporteur métallique, qui est relié à la terre 19. La source 9 de poudre plastique 10 d'incorporation peut consister en en bac de stockage 14, relié aux buses d'éjection 12, par des conduits d'alimentation 16 en poudre plastique d'incorporation 10, et une entrée d'alimentation 15 pour des particules de récupération, comme décrit ci-après.

L'installation 1 est contrôlée au niveau d'une commande centrale (non représentée), ou pour chaque poste de traitement, de sorte que le poste de poudrage 8 charge négativement la poudre plastique 10 d'incorporation entre 5 kV et 70kV, et de préférence entre 30 kV et 50 kV.

Puisqu'il y une différence de potentiel ou de polarité électrique entre les particules de poudre 10 et le tapis métallique 13, celles-ci sont accélérées vers le tapis 13 et pénètrent et sont incorporées et intégrées de manière homogène, au moins dans une couche superficielle, de dessus et/ou d'envers, dans la matrice macromoléculaire du substrat de la couche d'enduction 6. Lors de l'incorporation des particules dans la couche d'enduction, celles-ci fondent et s'intègrent complètement dans le réseau ou la matrice macromoléculaire du substrat, de sorte que celles-ci absorbent les plastifiants et les stabilisants de la couche d'enduction et se mélangent intimement à celle-ci, constituant ainsi une même matrice. Dans le cas où la matière thermoplastique de base du substrat de la couche d'enduction et les particules intégrées sont de nature identique ou quasi-identique, il est impossible ou pratiquement impossible de distinguer les particules de la matière thermoplastique de base, sauf à déterminer le pourcentage de fluidifiants dans la composition de la couche d'enduction par le biais par exemple du TEST FLEC, qui sera décrit plus loin, et qui démontre que la couche d'enduction selon l'invention ne comporte pratiquement pas, voire pas du tout, de fluidifiants. Les particules de poudre d'incorporation 10 qui sont en excès et n'atteignent pas la couche d'enduction sont collectées dans un collecteur 22 et reconduites vers l'entrée 15 d'alimentation du bac de stockage 14.

S'agissant des particules de poudre 10 d'incorporation, celles-ci ont de préférence une granulométrie moyenne comprise entre 20 à 50 microns.

De préférence, les particules de poudre plastique 10 utilisées sont des particules de PVC. Par PVC, on entend aussi bien des polymères dont les K WERTS sont préférentiellement compris entre 45 et 110, par exemple des homopolymères de K WERT compris entre 55 et 110, des copolymères de chlorure de vinyle et d'acétochlorure de vinyle, ou des copolymères greffés de K WERT compris entre 45 et 100. Le terme K WERT est bien connu à l'homme du métier dans ce domaine et ne nécessite pas plus de détails.

Le terme PVC peut également s'appliquer à des déchets de PVC ou de compositions à base de PVC aux copolymères PVC.

Par exemple, pour obtenir des couches de faible dépose, par exemple de densité surfacique d'environ 30 g/m², il est préférable d'utiliser des PVC homopolymères ou copolymères "extender", (appelés aussi résines de coupage). Par contre, les PVC homopolymères ou copolymères de type suspension, ou masse, sont utilisés dans le cas d'une dépose de densité surfacique importante (de l'ordre de 300g/m²). Les PVC émulsion et microsuspension peuvent aussi être utilisés avec ou sans traitement anti-mottant, pour obtenir des effets soyeux.

Ces différents PVC homopolymères ou copolymères peuvent aussi être utilisés en mélange avec un poudrage unique ou avec deux poudrages successifs, afin d'obtenir différents effets, par exemple de surface, ou décoratifs. On peut notamment effectuer l'étape de poudrage avec une poudre plastique contenant des additifs en poudre, ce qui permet aussi de modifier les propriétés de surface des plastisols PVC. De tels additifs sont notamment des cires, des agents mattants, des agents glissants, différentes charges, telles que le carbonate de calcium, le talc, la dolomie, la silice, et des oxydes variés.

Un avantage important du procédé et de l'installation selon l'invention est que le poudrage permet d'obtenir des formulations très chargées. Ceci n'est pas possible en enduction classique, sauf à utiliser de grandes quantités de plastifiant et de fluidifiant, donnant des produits trop souples contenant beaucoup de "COV" résiduels.

Une fois le poudrage effectué, la couche d'enduction 6 et les particules de poudre plastique 10 incorporées et intégrées, ainsi que le support 5, sont acheminés vers un poste de gélification 7. Ce poste de gélification 7 comprend par exemple un four 17 à air chaud direct ou indirect ou des lampes infrarouges (non représentées). A ce stade, la couche d'enduction n'est plus à l'état pâteux, mais est toujours plastique.

Si la quantité de matière saupoudrée est très importante ou si la densité apparente de la matière à poudrer est très faible (fine granulométrie), son intégration au coeur du plastisol frais surplastifié peut être facilitée par gélification sur un poste de gélification 7 comportant un tambour 18 chauffant. Cette variante est montrée par la Figure 2, dans laquelle les mêmes numéros de référence s'appliquent aux mêmes éléments de l'installation 1. De cette façon, il est facile d'obtenir des couches de remplissage très chargées, peu plastifiées et ne contenant pas de fluidifiant.

Après l'étape de gélification, la couche d'enduction intégrant la poudre plastique de manière homogène dans la matrice macromoléculaire, et éventuellement d'autres additifs ou charges sous forme de poudre, passe à des postes optionnels de cuisson 20, par exemple des lampes infrarouges, et de grainage 21 si cela est souhaité.

Un autre avantage de la présente invention est la possibilité de recycler les déchets de PVC et de ses copolymères, ce qui est de manière générale très facile en calandrage. Par-contre, en enduction, pour réutiliser les déchets de PVC broyés, il est nécessaire de les mélanger à un autre polymère en poudre, compatible avec le PVC, tel que l'éthylène vinyle acétate. L'action conjuguée du chauffage et de la pression (par exemple infrarouges plus compactage) permet d'agglomérer les déchets de PVC avec la matrice du polymère fondant. Ce procédé est coûteux car les résines fondantes en poudre (EVA ou autre) sont beaucoup plus chères que les déchets PVC.

Avec le procédé de poudrage sur plastisol pâteux, et l'installation, conformément à la présente invention, le plastisol pâteux surplastifié peut absorber de très grandes quantités de déchets PVC et par la même occasion apporter une plastification supplémentaire aux déchets PVC. A l'inverse, on peut déplastifier la couche finale plastisol et déchets PVC trop plastifiée, par l'ajout, dans les déchets, de PVC "extender" ou suspension qui absorbera une certaine quantité de plastifiant pour sa propre plastification.

La présente invention sera maintenant illustrée par quelques exemples de revêtements de sols fabriqués selon le procédé de l'invention décrite précédemment.

### EXEMPLES

### Exemple comparatif n°1:

L'exemple comparatif n°1 concerne une formulation de surface transparente standard :
- PVC émulsion (KW 80) 35
- PVC micro suspension (KW 70) 35
- PVC extender (KW 65) 30
- BUTYL BENZYLE PHTHALATE 30
- DI-OCTYLE-PHTHALATE 10
- Stabilisant BARYUM ZINC 4
- Stabilisant EPOXY 4
- Anti UV 0,2
- Fluidifiant 10

Ce plastisol contient 10 PCR (pour cent de résine PVC) de fluidifiant pour abaisser la viscosité.

### Exemple selon l'invention n°1 :

Cet exemple concerne une formulation de surface transparente sans fluidifiant et à faible plastification :
- PVC émulsion (KW 80) 45
- PVC micro suspension 45
- PVC extender (KW 65) 10
- BUTYL BENZYLE PHTHALATE 40
- DI-OCTYLE PHTHALATE 10
- Stabilisant BARYUM ZINC 5,7
- Stabilisant EPOXY 5,7
- Anti UV 0,3
- Fluidifiant zéro

On part d'une formulation un peu plus plastifiée ne contenant pas du tout de fluidifiant.

Pour obtenir une dépose de densité surfacique de 350 g/m² pour préparer une couche de surface, on enduit 275 g/m² de ce plastisol et on saupoudre 75 g/m² d'un PVC "extender" (275 g + 75 g = 350 g).

La plastification finale est ainsi ramenée à 34,7 PCR. Le PVC extender saupoudré à absorbé l'excès de plastification et de stabilisation, et la couche de surface ne contient pas de fluidifiant.

La vitesse et la température de gélification sont les mêmes que pour la surface comparative n°1.

### Exemple selon l'invention n°1 bis :

Si l'on veut abaisser davantage la plastification de la couche de surface, il faut augmenter la quantité de PVC saupoudré; dans ce cas il y a lieu aussi d'augmenter la quantité de stabilisant.

En partant de la formulation précédente, contenant 6,6 PCR de stabilisant BARYUM-ZINC et 6,6 PCR de stabilisant EPOXY, on obtient une couche de surface avec une plastification finale de 30 PCR, si sur 250 g/m² de ce plastisol, on saupoudre 100 g/m² de PVC "extender".

La comparaison des propriétés de ces surfaces est résumée dans le tableau I suivant :

**TABLEAU I**

| T**AUX DE VOLATILS COMPARES:** | **Exemple comparatif n°1** | **Exemple n°1** | **Exemple n°1 bis** |
|---|---|---|---|
| Dans le plastisol de départ | 10 pcr | 0 | 0 |
| Pendant la gélification (perte au four) | 7 à 8 pcr (70 à 80 %) | 0 | 0 |
| Dans le produit final METHODE NORD TEST FLEC* | 300 à 500 µg/m2/h | <50 µg/m2/h | <50 µg/m2/h |
| **CARACTERISTIQUES :** | | | |
| Résistance au tachage | Médiocre | Bonne | Très bonne |
| Souplesse | Souple | Ferme | Ferme |
| Toucher à la main | Plastique | Carrelage | Carrelage |
| Encrassement | Médiocre | Très bon | Très bon |
| Odeur (selon fluidifiant) | Forte à très forte | Très faible | Très faible |

| | | | |
|---|---|---|---|
| * FLEC = FIELD AND LABORATORY EMISSION CELL | | | |

La méthode NORD TEST-FLEC utilise la FLEC comme chambre de prélèvement. Cette chambre est une cellule circulaire de prélèvement en acier électropoli, d'un volume de 35 ml et permet d'analyser une surface de 0,0177 m². La méthode permet de quantifier les émissions de composés organiques volatils provenant de la surface des revêtements de sols. Les échantillons sont soumis à un balayage d'air de qualité et débit contrôlés (température de 23°C +/- 2°C, humidité rélative de 45%, +/- 5%, à 100 ml/minute). L'air est distribué sur le périmètre de la cellule, et sort par son centre, la sortie de l'air étant divisée en trois pour faire deux prélèvements et une sortie normale à l'air libre. L'échantillon de revêtement de sol est prélevé immédiatement lors de sa fabrication, enroulé sur lui-même avec la surface d'usage vers l'extérieur, emballé dans de l'aluminium, et l'ensemble mis dans un sac en polyéthylène fermé par thermosoudage. Après 4 semaines, l'échantillon est ouvert, et on y découpe 2 carrés de 20 cm de côté. Les carrés sont alors stockés à 23°C pendant 4 semaines et la première analyse est effectuée à la fin de cette période. Les appareils d'analyse comprennent un appareil de chromatographie gazeuse avec un détecteur de masse couplé à un désorbeur thermique. La concentration totale en composants organiques volatils exprimée en µg/m³ qui est ensuite transformée en µg*m-² *h⁻¹ est obtenue en faisant intervenir les paramètres de la chambre de prélèvement.

### Exemple comparatif n° 2

Cet exemple comparatif concerne une formulation de plastisol pour une enduction chargée :
- PVC émulsion (KW 80) 30
- PVC émulsion (KW 70) 70
- DI-OCTYLE PHTHALATE 70
- Stabilisant BARYUM-ZINC 2
- Dioxyde de Titane 2
- Carbonate de calcium 100
- Fluidifiant 4

### Exemple selon l'invention n° 2

Cet exemple concerne la possibilité de récupérer en enduction des déchets de PVC ou PVA préalablement micronisés.

Selon le K wert moyen des déchets à recycler, on ajustera le rapport des K werts des PVC émulsions ; ceci permet de ne pas trop abaisser le K wert moyen de la formulation finale. Avec des déchets micronisés de dalles calandrées de K wert moyen 60, on peut utiliser la formulation suivante :
- PVC émulsion (KW 80) 80
- PVC émulsion (KW 70) 20
- DI-OCTYLE PHTHALATE 70
- Stabilisant BARYUM-ZINC 2
- Dioxyde de Titane 1
- Carbonate de calcium 60
- Fluidifiant zéro

On enduit 400 g/m² de ce plastisol et on saupoudre 200 g/m² de déchets micronisés. L'ensemble est ensuite gélifié sur tambour chauffant aux mêmes vitesses et températures que la formulation comparative n°2.

## Revendications

1. Procédé de fabrication par enduction d'une bande en matière plastique, comprenant au moins une couche d'enduction (6) comportant un substrat composé par au moins une matière thermoplastique de base, notamment un polymère ou copolymère chloré, par exemple du chlorure de polyvinyle, ledit procédé comprenant au moins les étapes suivantes:
(a) on dispose d'un plastisol (3) à l'état pâteux comprenant le substrat sous forme divisée et un agent plastifiant ;
(b) on dépose le plastisol (3) en couche sur un support plat (5), pour obtenir la couche d'enduction (6) à l'état pâteux ;
(c) on gélifie le plastisol (3), pour obtenir ladite couche d'enduction (6) à l'état solide mais plastique ; et
entre l'étape (b) de formation de la couche d'enduction (6) et l'étape (c) de gélification du plastisol (3), on effectue au moins une étape de poudrage selon laquelle on accélère des particules de poudre plastique (10) vers la surface extérieure de la couche d'enduction (6) à l'état pâteux, et on distribue les particules ainsi accélérées selon la surface extérieure de ladite couche d'enduction (6),
**caractérisé en ce que :**
- la poudre plastique (10) comprend des particules d'au moins une matière thermoplastique d'incorporation, susceptible de s'intégrer ou se dissoudre au moins partiellement dans le substrat du plastisol (3) lors de l'étape (c) de gélification, notamment une matière thermoplastique de nature chimique identique ou similaire à celle de la matière thermoplastique de base ;
- l'accélération est volontaire, l'accélération volontaire et la distribution étant effectuées de sorte que les particules soient incorporées de manière homogène au moins dans une couche superficielle, de dessus et/ou d'envers, de la couche d'enduction (6).

2. Procédé selon la revendication 1, **caractérisé en ce que** la poudre plastique s'intègre complètement et de manière homogène dans la matrice macromoléculaire du substrat de la couche d'enduction.

3. Procédé selon la revendication 1, **caractérisé en ce que** la poudre plastique (10) à incorporer a une granulométrie comprise entre 2 µm et 500 µm, et préférentiellement entre 20 µm et 100 µm.

4. Procédé selon la revendication 1, **caractérisé en ce que** pendant l'étape de poudrage, les particules accélérées sont distribuées selon une densité surfacique comprise entre 30 g/m² et 500 g/m², et préférentiellement entre 50 g/m² et 300 g/m².

5. Procédé selon la revendication 1, **caractérisé en ce que** pendant l'étape de poudrage, la viscosité de la couche d'enduction (6) à l'état pâteux est réglée à une valeur inférieure à 5 Pa.s, et de préférence à une valeur de l'ordre de 1 Pa.s.

6. Procédé selon la revendication 1, **caractérisé en ce qu'**on répète au moins une fois l'étape de poudrage.

7. Procédé selon la revendication 1, **caractérisé en ce qu'**après l'étape (c) de gélification, on graine la couche d'enduction (6).

8. Installation (1) de fabrication par enduction d'une bande en matière plastique, comprenant au moins une couche d'enduction (6) comportant un substrat composé par au moins une matière thermoplastique de base, ladite installation (1) comprenant :
(A) une source (2) d'un plastisol (3) à l'état pâteux comprenant le substrat sous forme divisée et un agent plastifiant ;
(B) un poste de dépose (4) du plastisol en couche sur un support plat (5), pour obtenir la couche d'enduction (6) à l'état pâteux ;
(C) un poste de gélification (7) du plastisol, pour obtenir ladite couche d'enduction (6) à l'état solide mais plastique ;
et entre le poste (B) de dépose (4) de la couche d'enduction (6) et le poste (C) de gélification (7) du plastisol (3), est disposé un poste de poudrage (8), **caractérisée en ce que** le poste de poudrage comprend :
- une source (9) d'une poudre plastique (10), comprenant des particules d'au moins une matière thermoplastique d'incorporation ;
- des moyens d'accélération (11) des particules de la poudre (10) vers la surface extérieure de la couche d'enduction (6) à l'état pâteux, et de distribution des particules ainsi accélérées selon la surface extérieure de ladite couche d'enduction (6), agencés et contrôlés pour incorporer de manière homogène les particules distribuées et accélérées au moins dans une couche superficielle de la couche d'enduction (6).

9. Installation (1) selon la revendication 8, **caractérisée en ce que** les moyens d'accélération (11) et distribution de la poudre plastique (10) d'incorporation comprennent l'un quelconque des matériels suivants, à savoir matériel de projection par voie électrostatique ou triboélectrique, matériel avec métier dispersant, matériel avec turbine de projection.

10. Installation (1) selon la revendication 8, **caractérisée en ce que** les moyens d'accélération (11) et distribution de la poudre plastique (10) d'incorporation comprennent un matériel de projection par voie électrostatique, avec des moyens d'interposition de la couche d'enduction (6) à l'état pâteux entre au moins une buse d'éjection (12) de la poudre plastique, et le support (13) de nature métallique formant cible, lui-même relié à la terre (19).

11. Installation (1) selon la revendication 10, **caractérisée en ce qu'**elle est réglée pour charger négativement la poudre plastique (10) d'incorporation entre 5 kV et 70 kV, et de préférence entre 30 kV et 50 kV.

## Claims

1. Process for the manufacture, by coating, of a plastic web including at least one coating layer (6) comprising a substrate made up of at least one thermoplastic base material, especially a chlorine-containing polymer or copolymer, for example polyvinyl chloride, the said process including at least the following stages:
(a) a plastisol (3) is placed in the pasty state including the substrate in divided form and a plasticizing agent;
(b) the plastisol (3) is deposited as a layer onto a flat support (5) to obtain the coating layer (6) in the pasty state;
(c) the plastisol (3) is gelled to obtain the said coating layer (6) in the solid state but plastic; and
between the stage (b) of formation of the coating layer (6) and the stage (c) of gelling of the plastisol (3) at least one stage of powdering is performed, according to which particles of plastic powder (10) are accelerated towards the external surface of the coating layer (6) in the pasty state, and the particles thus accelerated are distributed according to the external surface of the said coating layer (6),
**characterized in that**:
- the plastic powder (10) includes particles of at least one thermoplastic material for incorporation, capable of at least partially being integrated into or dissolving in the substrate of the plastisol (3) during the gelling stage (c), especially a thermoplastic material of chemical nature which is identical with or similar to that of the thermoplastic base material,
- the acceleration is voluntary, the voluntary acceleration and the distribution being performed so that the particles are incorporated homogeneously in at least one, top and/or back, surface layer of the coating layer (6).

2. Process according to Claim 1, **characterized in that** the plastic powder is completely and homogeneously integrated into the macromolecular matrix of the substrate of the coating layer.

3. Process according to Claim 1, **characterized in that** the plastic powder (10) to be incorporated has a particle size of between 2 □m and 500 □m and preferably between 20 □m and 100 □m.

4. Process according to Claim 1, **characterized in that** during the powdering stage the accelerated particles are distributed according to a density per unit area of between 30 g/m² and 500 g/m² and preferably between 50 g/m² and 300 g/m².

5. Process according to Claim 1, **characterized in that** during the powdering stage the viscosity of the coating layer (6) in the pasty state is adjusted to a value lower than 5 Pa s and preferably to a value of the order of 1 Pa s.

6. Process according to Claim 1, **characterized in that** the powdering stage is repeated at least once.

7. Process according to Claim 1, **characterized in that** after the gelling stage (c) the coating layer (6) is grained.

8. Plant (1) for the manufacture, by coating, of a plastic web including at least one coating layer (6) comprising a substrate made up of at least one thermoplastic base material, the said plant (1) including:
(A) a source (2) of a plastisol (3) in the pasty state, including the substrate in divided form and a plasticizing agent;
(B) a station for depositing (4) the plastisol as a layer onto a flat support (5), to obtain the coating layer (6) in the pasty state;
(C) a station for gelling (7) the plastisol, to obtain the said coating layer (6) in the solid state but plastic;
and between the station (B) for depositing (4) the coating layer (6) and the station (C) for gelling (7) the plastisol (3) a station for powdering (8) is placed, the said plant being **characterized in that** the powdering station includes:
- a source (9) of a plastic powder (10) including particles of at least one thermoplastic material for incorporation;
- means for accelerating (11) the particles of the powder (10) towards the external surface of the coating layer (6) in the pasty state and for distributing the particles thus accelerated according to the external surface of the said coating layer (6), which are arranged and controlled in order to homogeneously incorporate the distributed and accelerated particles in at least one surface layer of the coating layer (6).

9. Plant (1) according to Claim 8, **characterized in that** the means for accelerating (11) and distributing the plastic powder (10) for incorporation include any one of the following items of hardware, namely hardware for spraying by an electrostatic or triboelectric route, hardware with a dispersing machine and hardware with a spraying turbine.

10. Plant (1) according to Claim 8, **characterized in that** the means for accelerating (11) and distributing the plastic powder (10) for incorporation include an item of hardware for spraying by an electrostatic route, with means for interposing the coating layer (6) in the pasty state between at least one nozzle for ejecting (12) the plastic powder and the support (13) of metallic nature forming a target, itself earthed (19).

11. Plant (1) according to Claim 10, **characterized in that** it is adjusted to charge the plastic powder (10) for incorporation negatively between 5 kV and 70 kV and preferably between 30 kV and 50 kV.

## Patentansprüche

1. Verfahren zum Herstellen eines Bandes aus Kunststoffmaterial durch Schichtbildung, das zumindest eine durch Schichtbildung ausgebildete Schicht (6) aufweist, die zumindest ein Substrat aufweist, welches aus zumindest einem thermoplastischen Basismaterial zusammengesetzt ist, insbesondere einem chlorierten Polymer oder Copolymer, beispielsweise Polyvinylchlorid, wobei das Verfahren zumindest die folgenden Schritte aufweist, nämlich:
a) Bereitstellen eines Plastisols (3) in pastösem Zustand, das das Substrat in zerteilter Form aufweist und Bereitstellen eines plastifizierenden Agens;
b) Aufbringen des Plastisols (3) als Schicht auf einen flachen Träger (5), um die durch Schichtbildung auszubildende Schicht (6) in einem pastösen Zustand zu erhalten;
c) Gelifizieren des Plastisols (3), um die durch Schichtbildung auszubildende Schicht (6) im festen, jedoch plastischen Zustand zu erhalten; und
Bewirken zumindest eines Bestäubungsschrittes, und zwar zwischen dem Schritt (b) der Ausbildung der durch Schichtbildung auszubildenden Schicht (6) und dem Schritt (c) der Gelifizierung des Plastisols (3), wobei man Teilchen aus Kunststoffpulver (10) auf die äußerere Oberfläche der durch Schichtbildung auszubildenden Schicht (6) im pastösen Zustand hin beschleunigt, und wobei man die so beschleunigten Teilchen über die äußere Oberfläche der genannten durch Schichtbildung auszubildenden Schicht (6) verteilt,
**dadurch gekennzeichnet,**
- **daß** das Kunststoffpulver (10) Teilchen aus zumindest einem zu inkorporierenden thermoplastischen Material aufweist, die in der Lage sind, sich in dem Substrat des Plastisols (3) während des Schrittes (c) der Gelifizierung zu integrieren oder sich teilweise zu lösen, insbesondere ein thermoplastisches Material mit einer chemischen Natur, die identisch oder ähnlich der des thermoplastischen Basismaterials ist;
- **daß** die Beschleunigung gewollt ist, wobei die gewollte Beschleunigung und die Verteilung derart bewerkstelligt wird, daß die Teilchen in homogener Weise in zumindest einer oberflächlichen Schicht - sei es die oben liegende und/oder die rückseitige der durch Schichtbildung ausgebildeten Schicht - inkorporiert werden.

2. Verfahren nach Anspruch 1, **dadurch gekennzeichnet, daß** sich das Kunststoffpulver vollständig und auf homogene Art und Weise in der makromolekularen Matrix des Substrates der durch Schichtbildung ausgebildeten Schicht integriert.

3. Verfahren nach Anspruch 1, **dadurch gekennzeichnet, daß** das zu inkorporierende Kunststoffpulver (10) eine Granulometrie zwischen 2 µm und 500 µm, vorzugsweise zwischen 20 µm und 100 µm, aufweist.

4. Verfahren nach Anspruch 1, **dadurch gekennzeichnet, daß** während des Bestäubungsschrittes die beschleunigten Teilchen mit einer Oberflächendichte verteilt werden, die zwischen 30 g/m² und 500 g/m² und vorzugsweise zwischen 50 g/m² und 300 g/m² liegt.

5. Verfahren nach Anspruch 1, **dadurch gekennzeichnet, daß** während des Bestäubungsschrittes die Viskosität der durch Schichtbildung auszubildenden Schicht im pastösen Zustand auf einen Wert unterhalb von 5 Pa·s und vorzugsweise auf einem Wert im Bereich von 1 Pa·s eingestellt wird.

6. Verfahren nach Anspruch 1, **dadurch gekennzeichnet, daß** man den Bestäubungsschritt zumindest einmal wiederholt.

7. Verfahren nach Anspruch 1, **dadurch gekennzeichnet, daß** nach dem Schritt (c) der Gelifizierung die durch Schichtbildung ausgebildete Schicht (6) geprägt wird.

8. Vorrichtung (1) zum Herstellen eines Bandes aus Kunststoffmaterial durch Schichtbildung, das zumindest eine durch Schichtbildung ausgebildete Schicht aufweist, die ein Substrat enthält, das aus zumindest einem thermoplastischen Basismaterial zusammengesetzt ist, wobei die Vorrichtung (1) folgendes aufweist, nämlich:
(A) eine Quelle (2) eines Plastisols (3) in pastösem Zustand, das das Substrat in verteilter Form aufweist und eine Quelle an einem plastifizierenden Agens;
(B) einen Aufträger (4) des Plastisols in Form einer Schicht auf einen flachen Träger (5), um die durch Schichtbildung auszubildende Schicht (6) in einem pastösen Zustand zu erhalten;
(C) einen Gelifizierer (7) für das Plastisol, um die durch Schichtbildung ausgebildete Schicht in einem festen, jedoch plastischen Zustand zu erhalten;
und wobei zwischen Aufträger (B) zum Auftragen (4) der durch Schichtbildung auszubildenden Schicht (6) und dem Gelifizierer (C) zum Gelifizieren (7) des Plastisols (3) ein Bestäuber (8) angeordnet ist, **dadurch gekennzeichnet, daß** der Bestäuber folgendes aufweist, nämlich:
- eine Quelle (9) an einem Kunststoffpulver (10), das Teilchen aus zumindest einem zu inkorporierenden thermoplastischen Material aufweist;
- Mittel (11) zum Beschleunigen der Pulverteilchen (10) in Richtung der äußeren Oberfläche der durch Schichtbildung auszubildenden Schicht in pastösem Zustand (6) und zum Verteilen der so beschleunigten Teilchen auf die äußere Oberfläche der genannten durch Schichtbildung auszubildenden Schicht (6) räumlich gleichmäßig und gesteuert, um die verteilten und beschleunigten Teilchen in homogener Art und Weise zu inkorporieren und zwar zumindest in einer oberflächlichen Schicht der durch Schichtbildung ausgebildeten Schicht (6).

9. Vorrichtung (1) nach Anspruch 8, **dadurch gekennzeichnet, daß** die Mittel (11) zum Beschleunigen und zum Verteilen des zu inkorporierenden Kunststoffpulvers (10) eine der folgenden Einrichtungen aufweist, nämlich eine Einrichtung zum Schutz auf elektrostatischem oder reibungselektrischem Wege, eine Einrichtung mit dispergierenden Mitteln, eine Einrichtung mit Schutzturbinen.

10. Vorrichtung (1) nach Anspruch 8, **dadurch gekennzeichnet, daß** die Mittel (11) zum Beschleunigen und zum Verteilen des zu inkorporierenden Kunststoffpulvers (10) eine Einrichtung zum Schutz auf elektrostatischem Wege aufweisen, mit Mitteln zum Zwischenbringen der durch Schichtbildung auszubildenden Schicht (6) in pastösem Zustand zwischen zumindest eine Ausblasdüse (12) für das Kunststoffpulver aufweisen und wobei der Träger (13) metallischer Natur die Prallplatte darstellt, die wiederum geerdet (19) ist.

11. Vorrichtung (1) nach Anspruch 10, **dadurch gekennzeichnet, daß** sie so eingestellt ist, um das zu inkorporierende Kunststoffpulver (10) zwischen 5 kV und 70 kV und vorzugsweise zwischen 30 kV und 50 kV negativ zu beladen.
